# EUROPÄISCHE PATENTSCHRIFT

(11) **EP 1 600 364 B1**
(45) Veröffentlichungstag und Bekanntmachung des Hinweises auf die Patenterteilung: **09.01.2008**
(21) Anmeldenummer: 05450081.4
(22) Anmeldetag: 02.05.2005
(51) Int. Cl.: B62D 53/08

(54) **Sattelanhänger**
Semitrailer
Semi-remorque

(30) Priorität: 26.05.2004 AT 9072004
(43) Veröffentlichungstag der Anmeldung: 30.11.2005
(73) Patentinhaber: Wilhelm Schwarzmüller Gesellschaft m.b.H., 4785 Haibach bei Schärding (AT)
(72) Erfinder: Schwarzmüller, Wilhelm, 4785 Haibach (AT); Schwarzmüller, Egon, 4785 Haibach (AT)
(74) Vertreter: Hübscher, Helmut

(56) Entgegenhaltungen:
- EP-A- 0 439 409
- EP-A- 0 528 143
- DE-U1- 20 306 057

## Beschreibung

Die Erfindung bezieht sich auf einen Sattelanhänger mit einer an Längsträger eines Fahrgestells angebundenen Aufliegeeinrichtung, die einen Gestellrahmen mit einer einen Königszapfen tragenden Gleitplatte umfaßt.

Ein ähnlicher Sattelanhänger ist z.B.: in DE 20 306 057 U offenbart.

Zur Verbindung eines Sattelzugfahrzeuges mit einem Sattelanhänger weist das Sattelzugfahrzeug eine Sattelkupplung mit einer Kupplungsplatte auf, auf der sich der Sattelanhänger über eine Aufliegeeinrichtung abstützt. Zu diesem Zweck ist die Aufliegeeinrichtung des Sattelanhängers mit einer auf der Kupplungsplatte der Sattelkupplung aufliegenden Gleitplatte verstehen, die einen in der Sattelkupplung verriegelbaren Königszapfen trägt. Während die zwischen dem Sattelzugfahrzeug und dem Sattelanhänger zu übertragenden Zugkräfte vom Königszapfen aufgenommen werden, werden die vertikalen Auflagekräfte über die Gleitplatte auf die Kupplungsplatte übertragen. Dies bedeutet, daß die Aufliegeeinrichtung sowohl die Aufliegekräfte als auch die Zugkräfte aufnehmen muß. Aus diesem Grunde weist die Aufliegeeinrichtung einen entsprechend ausgesteiften Gestellrahmen auf, der an den Längsträgern des Fahrgestells des Sattelanhängers angebunden ist und auf der Unterseite die Gleitplatte mit dem Königszapfen trägt. Da die maximale Höhe eines Anhängers vorgeschrieben ist, wird die zur Verfügung stehende Laderaumhöhe bei einem Sattelanhänger bei vorgegebener Höhe der Kupplungsplatte der Sattelkupplung durch die Bauhöhe der Aufliegeeinrichtung bestimmt. Um eine möglichst große Laderaumhöhe nutzen zu können, ist es bekannt (EP 0 439 409 B1), den Königszapfen nicht an der Unterseite der Gleitplatte über einen Flansch anzuschrauben, sondern von oben durch eine Durchtrittsöffnung in die Gleitplatte einzusetzen und den den Öffnungsrand von oben übergreifenden Befestigungsflansch des Königszapfens mit der Gleitplatte zu verschweißen. Diese Maßnahme bringt jedoch nur eine begrenzte Erniedrigung der Bauhöhe der Aufliegeeinrichtung mit sich, weil die Höhe des ausgesteiften, lastabtragenden Gestellrahmens aus Festigkeitsgründen nicht unter ein Mindestmaß verringert kann.

Der Erfindung liegt somit die Aufgabe zugrunde, einen Sattelanhänger der eingangs geschilderten Art so auszugestalten, daß eine weitere Verringerung der Bauhöhe der Aufliegeeinrichtung erreicht werden kann.

Die Erfindung löst die gestellte Aufgabe dadurch, daß die Gleitplatte als selbsttragende, an die Längsträger des Fahrgestells angebundene Platte ausgebildet ist und daß der Gestellrahmen, der eine höchstens der Dicke der Gleitplatte entsprechende Höhe aufweist, an den längsseitigen Stirnflächen der Gleitplatte anschließt.

Da die Gleitplatte als selbsttragende, lastabtragend an die Längsträger des Fahrgestells angebundene Platte ausgebildet ist, kann ein sonst erforderlicher ausgesteifter Gestellrahmen zur Aufnahme der Aufliege- und Zugkräfte entfallen, so daß der Gestellrahmen auf an die Gleitplatte anschließende Bodenbereiche des Sattelanhängers beschränkt werden kann, um vor allem die Gewichtsbelastung des Ladebodens durch die Ladung aufzunehmen. Dies bedeutet, daß die Dicke der Gleitplatte die Bauhöhe der Aufliegeeinrichtung bestimmt, weil die Höhe des an die Gleitplatte anschließenden Gestellrahmens aufgrund der beschränkten Belastung durchaus an die Dicke der Gleitplatte angepaßt werden kann, ohne eine Überlastung befürchten zu müssen. Die Ausbildung der Gleitplatte als selbsttragende, an die Längsträger des Fahrgestells angebundene Platte bringt zwar im Vergleich zu Aufliegeeinrichtungen mit einem tragenden Gestellrahmen ein höheres Gewicht der Aufliegeeinrichtung mit sich, doch bleibt dieses Mehrgewicht aufgrund der möglichen Beschränkung der Plattengröße auf ein Maß begrenzt, das im Hinblick auf den Gewinn an Laderaumhöhe durchaus in Kauf genommen werden kann.

Um die Brems-, Steuer- und Energieversorgungsleitungen für den Sattelanhänger trotz der die Bauhöhe bestimmenden, selbsttragenden Gleitplatte durch die Aufliegeeinrichtung in einfache Weise führen zu können, kann der Gestellrahmen über Formrohre mit einem im wesentlichen rechteckigen Querschnitt an die Gleitplatte angeschlossen sein. Durch diese in Längsrichtung der Aufliegeeinrichtung verlaufenden Formrohre können die jeweiligen Leitungen unbehindert verlegt werden.

Der Königszapfen kann in die Gleitplatte in an sich bekannter Weise von oben durch eine Durchtrittsöffnung eingesetzt werden, die aufgrund der Plattendicke abgesetzt ausgebildet werden kann, so daß der den Königszapfen tragende Aufnahmeteller auf dem abgesetzten Öffnungsrand aufgeschraubt wird und nicht über die Gleitplatte vorsteht, die ja einen Abschnitt der Ladefläche bildet. Aufgrund der Plattendicke besteht aber auch die Möglichkeit, den Königszapfen mit seinem Befestigungsflansch in eine Ausnehmung auf der Unterseite der Gleitplatte eingreifen zu lassen, ohne die Bauhöhe der Aufliegeeinrichtung zu vergrößern.

In der Zeichnung ist der Erfindungsgegenstand beispielsweise dargestellt. Es zeigen
- Fig. 1: die Aufliegeeinrichtung eines erfindungsgemäßen Sattelanhängers in einer vereinfachten Draufsicht,
- Fig. 2: einen Schnitt durch die Aufliegeeinrichtung nach der Linie II-II der Fig. 1 in einem größeren Maßstab,
- Fig. 3: einen Schnitt durch die Aufliegeeinrichtung nach der Linie III-III der Fig. 2,
- Fig. 4: einen Schnitt durch die Gleitplatte im Bereich des Königszapfens in einem größeren Maßstab und
- Fig. 5: eine der Fig. 4 entsprechende Darstellung einer Konstruktionsvariante.

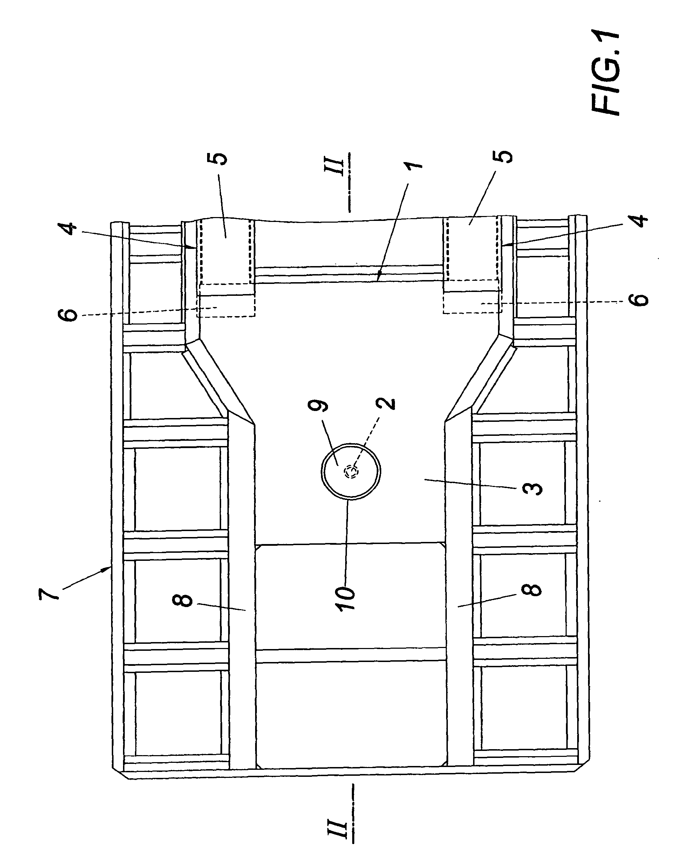

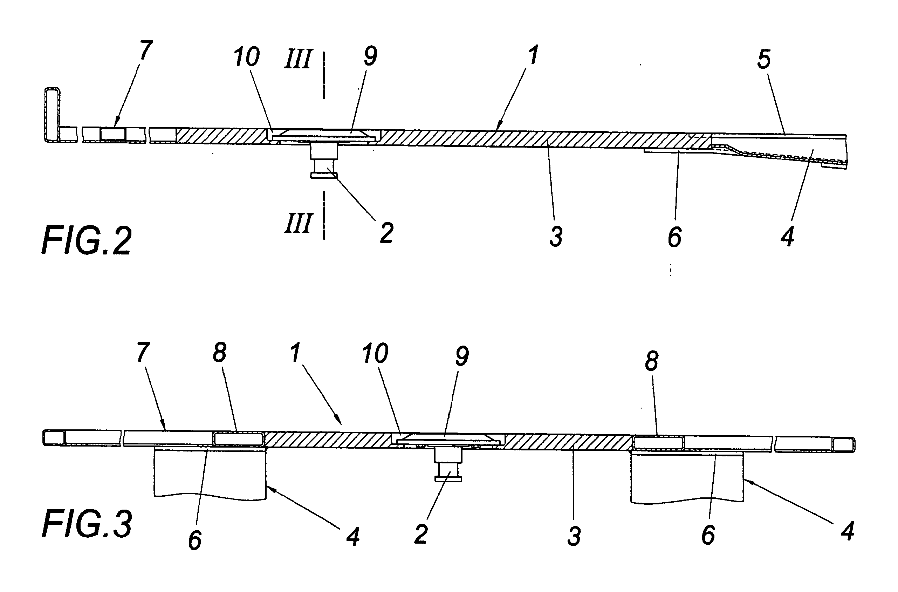

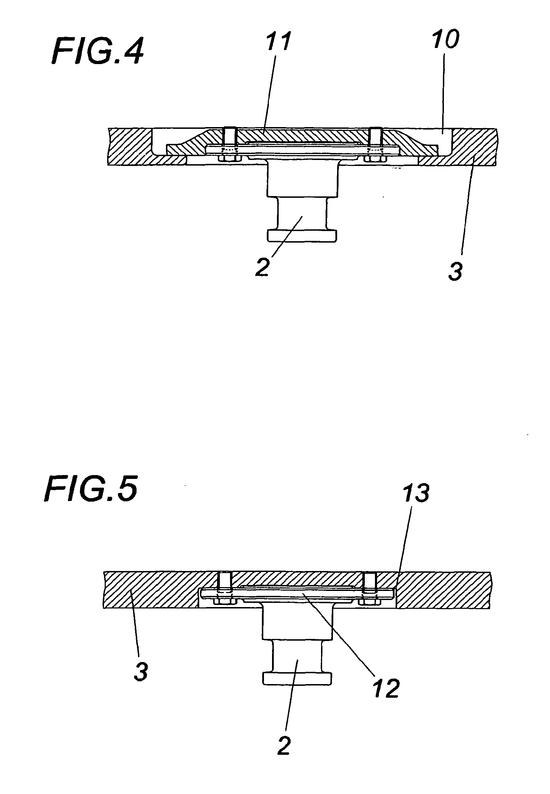

Wie sich insbesondere aus den Fig. 1 bis 3 ergibt, weist die Aufliegeeinrichtung 1 eines nicht näher dargestellten Sattelanhängers eine einen Königszapfen 2 aufnehmende Gleitplatte 3 auf, die als selbsttragende Platte ausgebildet ist und als solche an die Längsträger 4 des Fahrgestells lastabtragend angebunden wird. Zu diesem Zweck übergreifen die Ober- und Untergurte 5, 6 der im Anbindebereich als Kasten- oder I-Träger ausgebildeten Längsträger 4 die Gleitplatte 3 auf der Ober- und Unterseite. Wie der Fig. 2 entnommen werden kann, umfassen die Obergurte 5 die Gleitplatte 3 in einer Plattenvertiefung, um eine absatzlose, durch die Oberfläche der Gleitplatte 3 bestimmte Ladefläche zu erhalten. Die Untergurte 6 der Längsträger 4, die eine größere Übergriffslänge als die Obergurte 5 aufweisen, sind auf der Unterseite der Gleitplatte 3 aufgesetzt. Der den beispielsweise aus verlegten Dielen gefügten Boden des Sattelanhängers aufnehmende Gestellrahmen 7 ist an den längsseitigen Stirnflächen der Gleitplatte 1 angesetzt, und zwar mit Hilfe von Formrohren 8 mit einem im wesentlichen rechteckigen Querschnitt, wie dies der Fig. 3 entnommen werden kann. Durch diese Formrohre 8 können daher Brems-, Steuer- und Energieversorgungsleitungen durch die Aufliegeeinrichtung 1 geführt werden. Da die Gleitplatte 3 die Aufliege- und Zugkräfte übernimmt, braucht über den Gestellrahmen 7 lediglich die Auflast durch die Ladung des Sattelanhängers aufgenommen zu werden, was für den Gestellrahmen 7 vergleichsweise geringe Festigkeitsanforderungen mit sich bringt. Der Gestellrahmen 7 kann daher ohne weiteres in einer der Dicke der Gleitplatte 3 entsprechenden Höhe ausgeführt werden, so daß die Dicke der Gleitplatte 3 die Bauhöhe der Aufliegeeinrichtung bestimmt.

Der Königszapfen 2 kann in unterschiedlicher Weise mit der Gleitplatte 3 verbunden werden. So ist es gemäß der Fig. 4 möglich, den Königszapfen in einen Aufnahmeteller 9 einzusetzen, der von oben in eine abgesetzte Durchtrittsöffnung 10 der Gleitplatte 3 eingreift und auf dem abgesetzten Öffnungsrand 11 befestigt wird. Aufgrund der aus Festigkeitsgründen notwendigen Dicke der Gleitplatte 3 ist der Aufnahmeteller 9 in der abgesetzten Durchtrittsöffnung 10 versenkt angeordnet und ragt daher nicht über die durch die Oberfläche der Gleitplatte 3 bestimmte Ladefläche vor.

Gemäß der Fig. 5 wird der Königszapfen 2 über seinen Befestigungsflansch 12 von unten an der Gleitplatte 3 angeschraubt, die zu diesem Zweck eine vertiefte Ausnehmung 13 bildet. Auch bei dieser Ausführungsform ergibt sich keine Vergrößerung der Bauhöhe, weil der Befestigungsflansch 12 mit den Befestigungsschrauben innerhalb der Vertiefung der Ausnehmung 13 zu liegen kommt.

## Patentansprüche

1. Sattelanhänger mit einer an Längsträger (4) eines Fahrgestells angebundenen Aufliegeeinrichtung (1), die einen Gestellrahmen (7) mit einer einen Königszapfen (2) tragenden Gleitplatte (3) umfaßt, **dadurch gekennzeichnet, daß** die Gleitplatte (3) als selbsttragende, an die Längsträger (4) des Fahrgestells angebundene Platte ausgebildet ist und daß der Gestellrahmen (7), der eine höchstens der Dicke der Gleitplatte (3) entsprechende Höhe aufweist, an den längsseitigen Stirnflächen der Gleitplatte (3) anschließt.

2. Sattelanhänger nach Anspruch 1, **dadurch gekennzeichnet, daß** der Gestellrahmen (7) über Formrohre (8) mit einem im wesentlichen rechteckigen Querschnitt an die Gleitplatte (3) angeschlossen ist.

3. Sattelanhänger nach Anspruch 1 oder 2, **dadurch gekennzeichnet, daß** der in einem Aufnahmeteller (9) gehaltene Königszapfen (2) von oben in eine abgesetzte Durchtrittsöffnung (10) der Gleitplatte (3) eingesetzt ist.

4. Sattelanhänger nach Anspruch 1 oder 2, **dadurch gekennzeichnet, daß** der Königszapfen (2) mit seinem Befestigungsflansch (12) in eine Ausnehmung (13) auf der Unterseite der Gleitplatte (3) eingreift.

## Claims

1. Semi-trailer with a support arrangement (1) connected to longitudinal supports (4) of a bogie, which support arrangement (1) comprises a frame (7) with a slide plate (3) supporting a kingpin (2), **characterised in that** the slide plate (3) is formed as a self-supporting plate connected to the longitudinal supports (4) of the bogie, and **in that** the frame (7) which has a height corresponding at most to the thickness of the slide plate (3) is connected to the end faces of the longitudinal sides of the slide plate (3).

2. Semi-trailer according to claim 1, **characterised in that** the frame (7) is connected by means of moulded tubes (8) with an essentially rectangular cross-section to the slide plate (3).

3. Semi-trailer according to claim 1 or 2, **characterised in that** the kingpin (2) held in a receiving plate (9) is inserted from above into a stepped passage opening (1) of the slide plate (3).

4. Semi-trailer according to claim 1 or 2, **characterised in that** the kingpin (2) engages with its fixing flange (12) in a recess (13) on the lower side of the slide plate (3).

## Revendications

1. Semi-remorque, avec un dispositif de pose (1), attaché à des longerons (4) d'un châssis et comprenant un cadre de châssis (7), avec une plaque de glissement (3) portant un pivot central (2), **caractérisé par le fait que** la plaque de glissement (3) est réalisée sous la forme de plaque autoporteuse, attachée aux longerons (4) du châssis, et **par le fait que** le cadre de châssis (7), qui présente une hauteur correspondant au maximum à l'épaisseur de la plaque de glissement (3), se raccorde aux faces frontales, de côté longitudinal, de la plaque de glissement (3).

2. Semi-remorque selon la revendication 1, **caractérisé par le fait que** le cadre de châssis (7) est raccordé à la plaque de glissement (3), par des tubes de forme (8) ayant une section transversale sensiblement rectangulaire.

3. Semi-remorque selon la revendication 1 ou 2, **caractérisé par le fait que** le pivot central (2), maintenu dans un plateau support (9), est inséré par le haut dans une ouverture de passage (10), en décrochement, de la plaque de glissement (3).

4. Semi-remorque selon la revendication 1 ou 2, **caractérisé par le fait que** le pivot central (2) s'engage, par sa bride de fixation (12), dans un évidement (13) ménagé en face inférieure de la plaque de glissement (3).
